# EUROPEAN PATENT SPECIFICATION

(11) **EP 3 784 018 B1**
(45) Date of publication and mention of the grant of the patent: **14.01.2026**
(21) Application number: 19718583.8
(22) Date of filing: 01.04.2019
(51) Int. Cl.: A01D 41/12

(54) **AUGER COVER**
ABDECKUNG FÜR SCHNECKE
COUVERCLE DE VIS SANS FIN

(30) Priority: 26.04.2018 GB 201806796
(43) Date of publication of application: 03.03.2021
(73) Proprietor: AGCO International GmbH, 8212 Neuhausen am Rheinfall (CH)
(72) Inventor: CONTE DE SILVA, Leandro, 36042 Breganze (IT); DAL LAGO, Paolo, 36042 Breganze (IT); DAL SANTO, Gianfranco, 36042 Breganze (IT)
(74) Representative: AGCO Intellectual Property Department
(86) International application number: PCT/EP2019/058172
(87) International publication number: WO 2019/206576

(56) References cited:
- EP-A1- 0 274 761
- US-A1- 2008 149 463
- US-A1- 2008 305 843
- US-A1- 2014 113 694

## Description

### Field of Invention

The present invention relates to a cover for an auger. In particular, the invention relates to a cover for an auger for use with a grain bin loading auger. Such a grain bin loading auger may typically be found in an agricultural machine, such as a combine harvester.

### Background of invention

Combine harvesters produce grains from crops by a number of processes. Such combines commonly comprise grain bins on their upper surface, which grain bins are filled by auger conveyors (typically referred to simply as 'augers') which bring the grain from within the machine and up to and into the grain bin. Subsequently these bins are typically emptied by further augers, the contents being moved to further storage bins or trailers pulled by tractors, or the like. Document US 2014/113694 A1 discloses a combine harvester with an unloading conveyor.

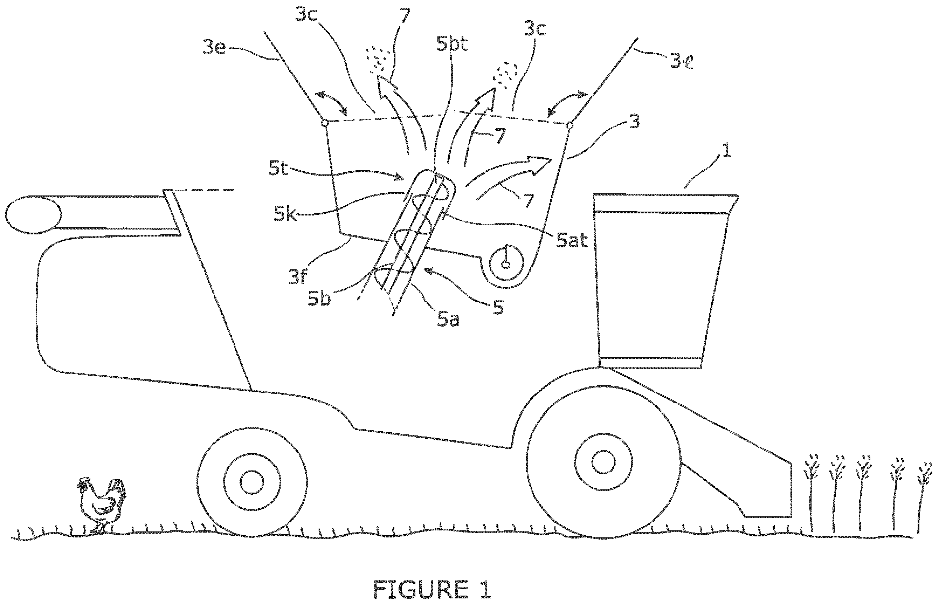

Figure 1 shows a typical general arrangement. Grain bin 3 is for the storage of grain which is produced by the combine harvester 1. Grain bin 3 is filled by Auger Conveyor 5 which brings grain up from the internal processing elements (thresher, cleaning shoe, etc - not shown) of the combine 1. For the purposes of this application, only the top part of Auger Conveyor 5 is shown - various specific arrangements within the Combine 1 will be familiar to those skilled in the art and are not relevant to this application. Auger Conveyor 5 comprises an Auger Tube 5a and an Auger Screw 5b. It can be seen that the top end 5t of the Auger Conveyor 5 is situated at a point within the grain bin 3 that is raised from the floor 3f of the grain bin 3, but also below the top of the grain bin 3t. The top end is raised from the floor in order that the weight of grain, as the bin fills, does not provide too much resistance to the auger screw. Similarly, the Auger must not sit so high that it interferes with a roof of the grain bin or, as shown in this Figure, grain bin extensions 3e which also act as roofs and which can move from an open (up) position to a closed (down) position as indicated by dotted lines 3c. It can also be seen that the top end of the Auger screw 5bt sits somewhat proud of the top end of the Auger Tube 5at. This is also to prevent the weight of grain from providing too great a resistance to the turning of the screw 5b. Bracket 5k holds a bearing (not shown) for supporting the top end of the Auger screw 5bt.

Typically these grain bin auger conveyors 5 are required to move a large amount of grain at relatively high speed due to the high capacity of modern combines. As such, particularly when the top end 5t of the Auger 5 is uncovered by grain, the grain can be flung outwards upwards and sideways from the Screw 5b, as indicated by arrows 7, and may be flung out of the grain bin 3 altogether, causing losses.

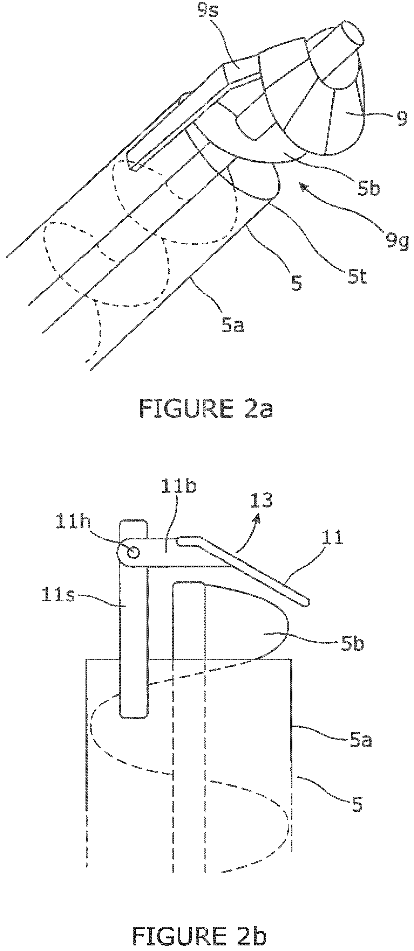

Existing solutions to this problem are illustrated in Figures 2a and 2b.

Figure 2a illustrates a fixed sheet metal auger cover 9 which is affixed to the top of the auger conveyor 5 by means of supports 9s. The purpose of this cover 9 is simply to stop the grains ejecting from the top of the auger 5 in certain directions. The issue then is that the gap 9g between the auger cover 9 and the top end 5t of the auger tube 5a has to be relatively small in order to control the ejection of the grains, but that if this gap is too small then the small passage area provided will cause back-pressure on the auger screw 5b, resulting in an excessive increased torque demand. A bracket for supporting a bearing for supporting the top end of the screw 5b is not shown in this Figure, to aid in clarity.

Figure 2b illustrates an alternative where a pivoted cover 11 is affixed to the top of the auger 5 by means of supports 11s. The cover has brackets 11b which are hingedly attached at point 11h to the supports 11s. Accordingly, as the grain is ejected from the top of auger 5, the directions in which it is thrown are constrained by the plate 11. Also, as the grain bin starts to fill, the rising grain level causes the plate 11 to rise in the direction of arrow 13. As the grain bin is emptied again, the plate is allowed to return to its lower position.

The issue then is that grains may get caught within the hinging mechanism, thus stopping the cover returning - additionally, depending on the inclination of the overall system (the combine) whilst in operation, gravity alone may be unable to return the plate to its initial position. Again, in this Figure, a bracket for supporting a bearing for the top end of the screw 5b is deleted for clarity, although it will be recognised that a bracket such as that shown in Figure 1 as bracket 5k may serve the dual function of supporting a bearing for supporting the top end of the auger screw and for supporting the pivoted cover 11 in the manner of bracket 11s.

A solution to these problems would be desirable.

### Summary of Invention

Accordingly there is provided in an aspect of the invention a combine harvester having a grain bin and an auger conveyor arranged to fill the grain bin and comprising an auger cover, said auger cover comprising a cover plate, said cover plate being hingedly attached to the auger conveyor, characterised in that the hinge comprises a hinge plate of flexible material.

The advantage of this is that a hinge is provided which is not subject to being blocked by grains, as a simple hinge plate of material does not have any gaps in it which can be blocked up, unlike a normal hinge.

In an embodiment, the hinge plate comprises a flexible material which is also resilient. By this is meant that the hinge plate resists deformation and also will return to its original shape once a deforming force is released from **it.** The advantage of this is that the cover plate of the auger cover is resiliently urged towards a starting position.

In an embodiment, the hinge plate is made of canvas - ie: a cotton canvas material or a cotton canvas/canvas based material. The hinge plate may be a cotton canvas material with a rubber coating or a vulcanised rubber coating. A suitably thick canvas based material is both flexible and resilient. As the skilled person would appreciate, the thickness of the canvas and/or the precise make-up of the material can be selected in order to provide the correct degree of both flexibility and resilience as demanded by the exact requirements of the auger in question, such as for example the size of auger, size of cover plate, weight of cover plate, and the speed and power with which grains are pushed into the cover plate by the auger screw. The amount of resilience demonstrated by the hinges must be sufficient to prevent the cover plate merely being blown completely out of the way by grains issuing from the auger, particularly whilst the bin is largely empty, whilst not being so stiff that the cover plate is not moved aside by the mass of grain which builds up in the bin and eventually fills up to a point where the end of the auger is covered, and the cover plate is no longer required to stop the grains being thrown from the bin.

It has been found that a thick canvas material with a vulcanised rubber coating is a suitable material for this application. The range of thickness found to be suitable to fulfil the operational requirements is typically in the range 4-10mm, preferably 6-8mm, and in a specific embodiment later described herein, the thickness of material used is 7mm. It will be appreciated by the skilled person that other materials may be found suitable and used, whilst still remaining within the inventive ambit of this application.

### Specific Description

The invention will now be described in more detail by reference to the further attached Figures.

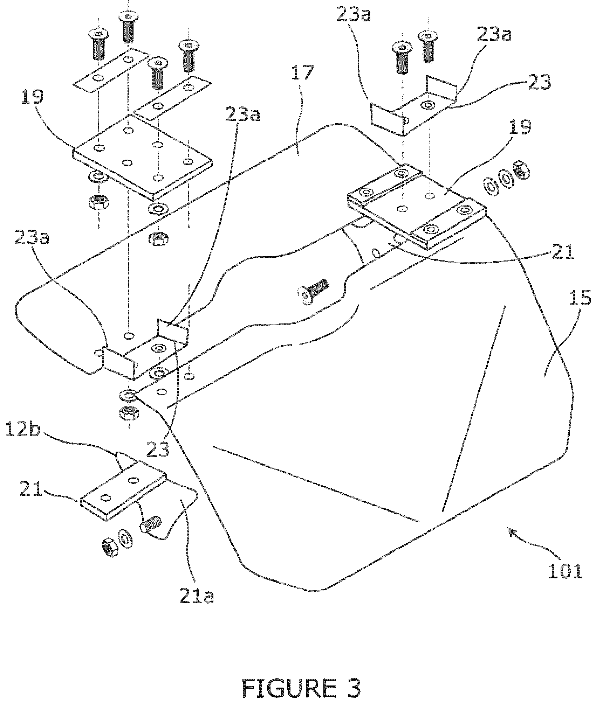

Figures 3 to 6 show an auger cover constructed according to aspects and embodiments of the present invention.

Figure 3 shows a partially exploded view of an auger cover assembly 101. There are provided two cover plates 15 and 17 which are joined to a pair of canvas hinges 19. The canvas hinges comprise a canvas 'plate' of cotton canvas material with a vulcanised rubber coating and an overall thickness of 7mm. In turn, the canvas hinge plates are bolted to a pair of support brackets 21 by which the auger cover is ultimately attached to an auger (via an auger bracket 5tb) as shown in further Figures. It can be seen that each bracket 21 is also provided with protrusions 21a and 21b which act as 'hardstops' to prevent the cover plates 15 and 17 respectively from moving 'downwards' beyond a certain point ('lower hardstops'). Further, to the upper side of each of the canvas hinge plates 19 are attached a pair of upper hardstop brackets 23, each comprising upward protrusions 23a which prevent the cover plates from moving upwards beyond a certain point.

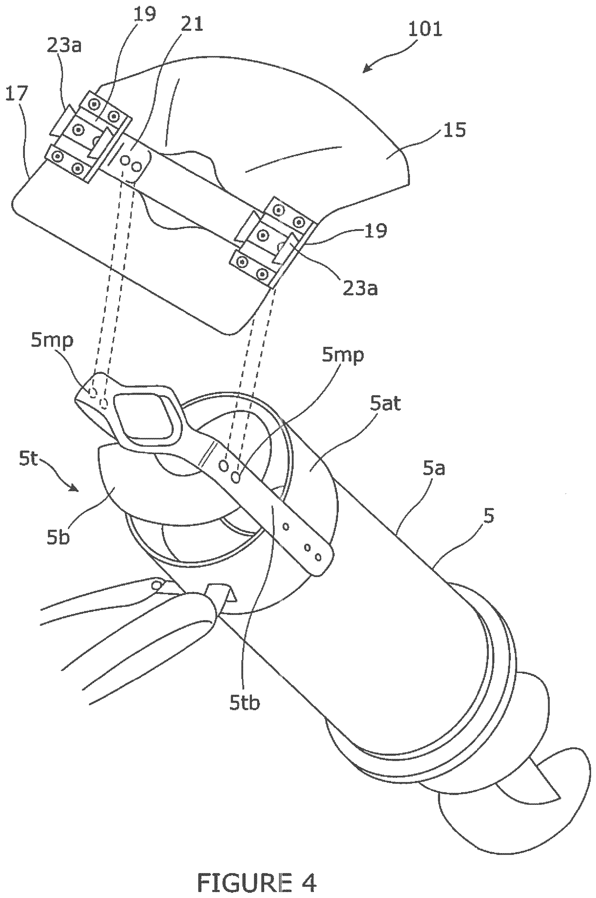

Figure 4 shows an assembled auger cover assembly 101 as per Figure 3, in relation to an auger assembly 5 comprising an auger screw 5b, an auger tube 5a, and an auger top bracket 5tb attached to the top end 5at of the auger tube 5a. Auger top bracket 5tb also acts as a mounting point for a support bearing for the top end 5t of the auger screw 5b. The auger cover assembly 101 is designed to be affixed to the auger top bracket 5tb by the brackets 21, at the mounting points 5mp. Standard nut and bolt assemblies, with suitable washers, are used for connecting all the pieces together, in accordance with standard practice in which the skilled person will be well familiar - as well as the possibility of normal standard alternatives, such as rivets.

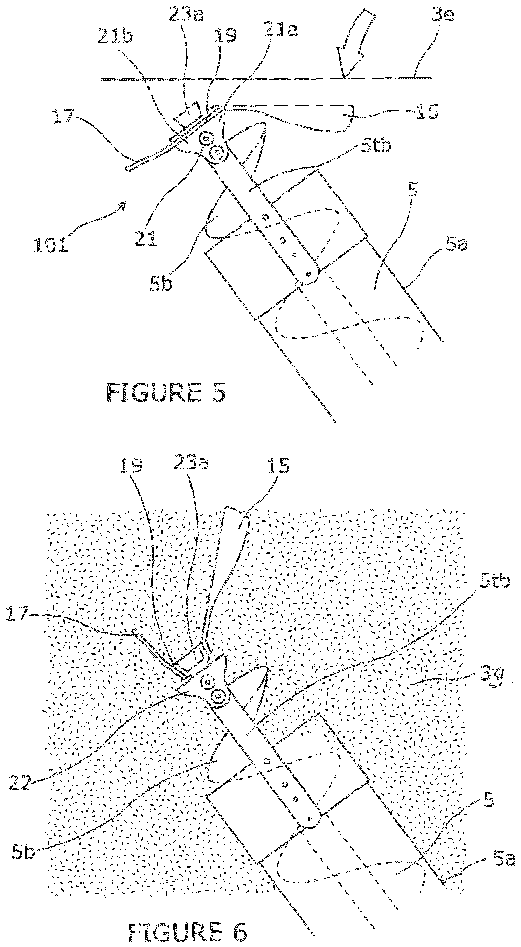

Figure 5 shows a side view of the auger 5 and auger cover assembly 101 when assembled together. Also shown is the proximity of the auger cover assembly to a closed cover 3e of the grain bin 3 (not shown), which close proximity is desirable as has been previously discussed. As can be seen, the cover plates 15 and 17 are resting on the lower hardstops 21a and 21b respectively of the brackets 21. The grain bin is empty.

Figure 6 shows a side view of the auger 5 and cover assembly 101 when assembled together and in a situation where the grain bin is full of grain 3g. As can be seen, the rising level of grain 3g in the bin as the grain has entered the bin has caused the cover plates 15 and 17 to rise up until they contact the upper hardstops 23a of upper hardstop brackets 23.

The upward movement of the cover plates 15 and 17 has been allowed by the flexible nature of the canvas hinge plates 19, which nonetheless also have a degree of resilience which prevent the cover plates being pushed straight up into the upper hardstops 23a by the action of grain coming into the grain bin via the auger 5. The resilience of the hinge plates 19 also means that when the grain bin is subsequently emptied, the cover plates 15 and 17 will return to their original positions as shown in Figure 5.

The canvas hinge plates in the present specific embodiment are cotton canvas covered with a vulcanised rubber coating as previously disclosed. The 'lay up' of the cotton canvas is such that the threads of the canvas are aligned to ensure that the plate is less resistant to flexing in one direction than another - consequently the hinges are carefully built into the auger cover assembly such that, in this embodiment, the hinge is less resistant to flexing in an upwards direction. Also, the 'lay up' of the cotton canvas is such as to ensure that the hinge will have maximum resistance to any sideways flexion of the hinge, consequently minimising any sideways motion of the cover plates, which is undesirable. The invention will be defined by the following claims.

## Claims

1. A combine harvester (1) having a grain bin (3) and an auger conveyor (5) arranged to fill the grain bin (3) and comprising an auger cover (101), said auger cover (101) comprising a cover plate (15;17), said cover plate (15;17) being hingedly attached to the auger conveyor (5), **characterised in that** the hinge comprises a hinge plate (19) of flexible material.

2. A combine harvester (1) as claimed in claim 1, wherein the flexible material comprises a resiliently flexible material.

3. A combine harvester (1) as claimed in claim 1 or 2, wherein the flexible material comprises a canvas material.

4. A combine harvester (1) as claimed in claim 3, wherein the flexible material comprises a rubberised canvas material.

5. A combine harvester (1) as claimed in claim 4, wherein the flexible material comprises a cotton canvas material with a vulcanised rubber coating.

6. A combine harvester (1) as claimed in any of claims 3 to 5, wherein the flexible material comprises a canvas material laid up to provide greater flexibility in a specific direction.

7. A combine harvester (1) as claimed in any previous claim, wherein the flexible material is in the range of 4-10mm thick.

8. A combine harvester (1) as claimed in any previous claim, wherein the flexible material is in the range of 6-8mm thick.

9. A combine harvester (1) as claimed in any previous claim, wherein the flexible material is approximately 7mm thick.

10. A combine harvester (1) as claimed in any previous claim, wherein said auger cover (101)comprises a pair of cover plates (15,17).

11. A combine harvester (1) as claimed in claim 10, wherein said pair of cover plates (15,17) shares a common hinge plate (19).

12. A combine harvester (1) as claimed in claim 10 or 11, wherein said pair of cover plates (15,17) share a pair of common hinge plates (19).

## Patentansprüche

1. Mähdrescher (1) mit einem Getreidebehälter (3) und einem Schneckenförderer (5), der zum Füllen des Getreidebehälters (3) angeordnet ist und eine Schneckenabdeckung (101) umfasst, wobei die Schneckenabdeckung (101) eine Abdeckplatte (15; 17) umfasst, wobei die Abdeckplatte (15; 17) gelenkig an dem Schneckenförderer (5) befestigt ist, **dadurch gekennzeichnet, dass** das Scharnier eine Scharnierplatte (19) aus flexiblem Material umfasst.

2. Mähdrescher (1) nach Anspruch 1, wobei das flexible Material ein elastisch flexibles Material umfasst.

3. Mähdrescher (1) nach Anspruch 1 oder 2, wobei das flexible Material ein Leinwandmaterial umfasst.

4. Mähdrescher (1) nach Anspruch 3, wobei das flexible Material ein gummiertes Leinwandmaterial umfasst.

5. Mähdrescher (1) nach Anspruch 4, wobei das flexible Material ein Baumwollleinwandmaterial mit einer vulkanisierten Kautschukbeschichtung umfasst.

6. Mähdrescher (1) nach einem der Ansprüche 3 bis 5, wobei das flexible Material ein Leinwandmaterial umfasst, das aufgelegt ist, um eine größere Flexibilität in einer bestimmten Richtung vorzusehen.

7. Mähdrescher (1) nach einem der vorhergehenden Ansprüche, wobei das flexible Material im Bereich von 4-10 mm dick ist.

8. Mähdrescher (1) nach einem der vorhergehenden Ansprüche, wobei das flexible Material im Bereich von 6-8 mm dick ist.

9. Mähdrescher (1) nach einem der vorhergehenden Ansprüche, wobei das flexible Material ungefähr 7 mm dick ist.

10. Mähdrescher (1) nach einem der vorhergehenden Ansprüche, wobei die Schneckenabdeckung (101) ein Paar Abdeckplatten (15, 17) umfasst.

11. Mähdrescher (1) nach Anspruch 10, wobei das Paar Abdeckplatten (15, 17) eine gemeinsame Scharnierplatte (19) aufweist.

12. Mähdrescher (1) nach Anspruch 10 oder 11, wobei das Paar Abdeckplatten (15, 17) ein Paar gemeinsame Scharnierplatten (19) aufweist.

## Revendications

1. Moissonneuse-batteuse (1) comprenant un bac à grains (3) et un transporteur à vis sans fin (5) conçu pour remplir le bac à grains (3) et comprenant un couvercle de vis sans fin (101), ledit couvercle de vis sans fin (101) comprenant une plaque de couvercle (15 ; 17), ladite plaque de couvercle (15 ; 17) étant fixée de manière articulée au transporteur à vis sans fin (5), **caractérisée en ce que** l'articulation comprend une plaque d'articulation (19) en matériau souple.

2. Moissonneuse-batteuse (1) selon la revendication 1, le matériau souple comprenant un matériau souple de manière élastique.

3. Moissonneuse-batteuse (1) selon la revendication 1 ou 2, le matériau souple comprenant un matériau de toile.

4. Moissonneuse-batteuse (1) selon la revendication 3, le matériau souple comprenant un matériau de toile caoutchoutée.

5. Moissonneuse-batteuse (1) selon la revendication 4, le matériau souple comprenant un matériau de toile de coton doté d'un revêtement de caoutchouc vulcanisé.

6. Moissonneuse-batteuse (1) selon l'une quelconque des revendications 3 à 5, le matériau souple comprenant un matériau de toile déposé pour fournir une plus grande souplesse dans une direction spécifique.

7. Moissonneuse-batteuse (1) selon l'une quelconque des revendications précédentes, le matériau souple ayant une épaisseur comprise entre 4 et 10 mm.

8. Moissonneuse-batteuse (1) selon l'une quelconque des revendications précédentes, le matériau souple ayant une épaisseur comprise entre 6 et 8 mm.

9. Moissonneuse-batteuse (1) selon l'une quelconque des revendications précédentes, le matériau souple ayant une épaisseur d'environ 7 mm.

10. Moissonneuse-batteuse (1) selon l'une quelconque des revendications précédentes, ledit couvercle de vis sans fin (101) comprenant une paire de plaques de couvercle (15, 17).

11. Moissonneuse-batteuse (1) selon la revendication 10, ladite paire de plaques de couvercle (15, 17) partageant une plaque d'articulation (19) commune.

12. Moissonneuse-batteuse (1) selon la revendication 10 ou 11, ladite paire de plaques de couvercle (15, 17) partageant une paire de plaques d'articulation (19) communes.
